# EUROPÄISCHE PATENTANMELDUNG

(11) **EP 3 425 778 A1**
(43) Veröffentlichungstag der Anmeldung: **09.01.2019**
(21) Anmeldenummer: 17179453.0
(22) Anmeldetag: 04.07.2017
(51) Int. Cl.: H02K 15/00, H02K 17/16

(54) **VERFAHREN ZUR HERSTELLUNG EINES KURZSCHLUSSRINGES AUS EINEM METALLBAND**

(71) Anmelder: Siemens Aktiengesellschaft, 80333 München (DE)
(72) Erfinder: Körner, Olaf, 90469 Nürnberg (DE); Oude Kotte, Freerk Jacobus, 90547 Stein (DE)

(57) **Zusammenfassung**

Die Erfindung betrifft ein Verfahren zur Herstellung eines Kurzschlussringes (4) eines Käfigläufers (3) einer Asynchronmaschine (1) durch folgende Schritte:
- Stanzen von Ausnehmungen (8,12) aus einem elektrisch leitenden Blechband (7), insbesondere Nuten und/oder Sicken an beiden längeren äußeren Rändern eines Blechbandes (7),
- Verformen des bearbeiteten Blechbandes (7), derart, dass es hochkant schraubenbahnförmig um eine Achse (10) gewickelt wird, und so einen Ringkörper schafft.

## Beschreibung

Die Erfindung betrifft ein Verfahren zur Herstellung eines Kurzschlussringes eines Käfigläufers von Asynchronmaschine, ein Verfahren zur Herstellung eines Käfigläufers einer Asynchronmaschine als auch einen Käfigläufers und eine Asynchronmaschine.

Kurzschlussringe werden bei kleineren Motoren insbesondere durch ein Druckgussverfahren hergestellt. Bei größeren Motoren werden vorgefertigte Kurzschlussringe mittels dementsprechend geeigneten Lötverfahren mit Leiterstäben, die axial aus dem Blechpaket des Käfigläufers ragen elektrisch leitend verbunden.

Außerdem ist es aus der DE 10 2013 005 050 A1 bekannt Kurzschlussringe aus einem Scheibenpaket aufzubauen.

Nachteilig bei den oben beschriebenen Aufbauformen des Kurzschlussringes eines Kurzschlussläufers bzw. Käfigläufers ist der Aufwand beim Herstellungsverfahren, sowohl bei einem Druckgussverfahren aber auch bei den einzelnen Lötvorgänge von Stäben mit dementsprechenden Abschnitten des Kurzschlussringes. Ebenso ist je nach Durchmesser des Käfigläufers ein erhöhter Materialeinsatz notwendig, um Scheiben aus Kupferblechen auszustanzen.

Ausgehend davon liegt der Erfindung die Aufgabe zugrunde ein vergleichsweise einfaches Verfahren zur Herstellung eines Kurzschlussrings und eines Kurzschlussläufers bereitzustellen, bei dem der Materialeinsatz der dazu verwendeten Materialien auf ein Minimum gesenkt bzw. das Herstellverfahren zeitlich und bezüglich des Materialeinsatzes optimiert werden. Des Weiteren soll der Käfigläufer im Betrieb der Asynchronmaschine eine vergleichsweise hohe Effizienz aufweisen.

Die Lösung der gestellten Aufgabe gelingt durch ein Verfahren zur Herstellung eines Kurzschlussringes eines Käfigläufers einer Asynchronmaschine durch folgende Schritte:
- Stanzen von Ausnehmungen aus einem elektrisch leitenden Blechband, insbesondere Nuten und/oder Sicken an beiden längeren äußeren Rändern eines Blechbandes,
- Verformen des bearbeiteten Blechbandes, derart, dass es hochkant schraubenbahnförmig um eine Achse gewickelt wird, und so einen Ringkörper schafft.

Die Lösung der gestellten Aufgabe gelingt ebenso durch ein Verfahren zur Herstellung eines Käfigläufers einer Asynchronmaschine durch folgende Schritte:
- Bereitstellen eines magnetisch leitfähigen Grundkörpers mit Nuten,
- Einsetzen zumindest eines elektrisch leitfähigen Leiterstabes in jeweils eine Nut, derart, dass jeweils die Endabschnitte der Leiterstäbe axial beidseitig aus dem Grundkörper ragen,
- axiales Aufsetzen der Kurzschlussringe hergestellt nach einem der Ansprüche 1 oder 4 auf die Endabschnitte der Leiterstäbe.

Die Lösung der gestellten Aufgabe gelingt ebenso durch ein Verfahren zur Herstellung eines Käfigläufers einer Asynchronmaschine durch folgende Schritte:
- Bereitstellen eines magnetisch leitfähigen Grundkörpers mit Nuten,
- Einsetzen zumindest eines Leiterstabes in jeweils eine Nut, derart, dass jeweils die Endabschnitte der Leiterstäbe axial beidseitig aus dem Grundkörper ragen,
- Anordnen, insbesondere bewickeln eines biegbaren Blechbandes auf die Endabschnitte der Leiterstäbe, derart, dass die Blechhöhe, hochkant betrachtet, im Wesentlichen der radialen Dicke des Kurzschlussringes entspricht.

Die Lösung der gestellten Aufgabe gelingt ebenso durch einen Käfigläufer einer Asynchronmaschine mit in Nuten eines magnetisch leitfähigen Grundkörpers befindlichen elektrischen Leitern, deren Endabschnitte an den Stirnseiten aus dem Grundkörper ragen und durch Kurzschlussringe elektrisch leitend verbunden sind, wobei die Kurzschlussringe auf zumindest einer Stirnseite des Käfigläufers durch ein hochkant gewickeltes elektrisch leitfähiges Blechband gebildet sind.

Die Lösung der gestellten Aufgabe gelingt ebenso durch eine Asynchronmaschine mit einem Käfigläufer nach einem der Ansprüche 11 bis 14.

Durch das erfindungsgemäße Verfahren wird ein Kurzschlussring sehr materialsparend durch ein Blechband hergestellt, es fallen lediglich die Stanzabfälle der Ausnehmungen, also insbesondere der Nuten an, in die später die Leiterstäbe angeordnet werden. Des Weiteren wird je nach Anzahl der Schraubenbahnen und/oder Höhe des Blechbandes ein ausreichender Leitungsquerschnitt für den Kurzschlussring des Käfigläufers in Umfangsrichtung betrachtet bereitgestellt.

Dabei lassen sich grundsätzlich schmalere Blechbänder einfacher wickeln. Dies ist insbesondere für Käfigläufer geringerer Achshöhe relevant. Dabei ist es vorteilhaft, wenn die radiale Höhe der Leiter vergleichsweise gering ist, um die radiale Höhe des Kurzschlussrings, also im Wesentlichen der Blechhöhe danach Auswählen zu können.

Um die elektrische Leitfähigkeit noch besser zu gewährleisten werden die einzelnen Schraubenbahnen miteinander elektrisch leitend verbunden. Dies gelingt insbesondere dadurch, dass diese verschweißt oder verlötet werden, so dass die Schraubenbahnen eine kompakte Einheit, also einen Kurzschlussring bilden. Die Verschweißung, insbesondere Laserverschweißung kann dabei radial und/oder axial erfolgen.

Der magnetisch leitfähige Grundkörper ist grundsätzlich entweder aus axial geschichteten Blechen oder aus einem gesinterten Material aufgebaut.

Um eine ordnungsgemäße Weiterverarbeitbarkeit des Kurzschlussringes zu gewährleisten sind dabei die Ausnehmungen, insbesondere die der Nuten während des Herstellverfahrens axial fluchtend anzuordnen. In diese Nuten werden später die Endabschnitte der elektrischen Leiter insbesondere Leiterstäbe eingesetzt und mit dem Kurzschlussring elektrisch leitend kontaktiert. Dabei sind ebenso die oben genannten Kontaktierverfahren, wie Verschweißen (Laserstrahlschweißen oder Elektronenstrahlschweißen) oder Verlöten anzuwenden.

Um vorteilhafterweise Unwuchten des Kurzschlussringes beim Käfigläufer zu vermeiden, werden dabei die Anzahl der Schraubenwindungen als ein ganzzahliges Vielfaches ausgeführt, so dass der Käfigläufer im späteren Einsatz bei der Asynchronmaschine ein gleichmäßiges Drehmoment abgibt und einen vibrationsarmen Betrieb gewährleistet.

Der Käfigläufer wird nunmehr dadurch hergestellt, dass axial auf den magnetisch leitfähigen Grundkörper mit seinen aus den Stirnseiten ragenden elektrisch leitfähigen Leiterstäben jeweils ein derartig gebildeter Kurzschlussring aufgesetzt wird. Eine elektrische Kontaktierung wird dabei durch eine Verschweißung oder Verlötung der Leiterstäbe mit den schraubenförmig angeordneten Blechen der Kurzschlussringe gewährleistet. Der Kurzschlussring ist also bereits vorgefertigt und muss lediglich noch an den Stirnseiten des magnetischen Grundkörpers positioniert und mit den Leiterstäben kontaktiert werden.

In einem dazu alternativen Verfahren zur Herstellung eines Käfigläufers einer Asynchronmaschine wird dabei an den Stirnseiten des magnetisch leitfähigen Grundkörpers auf die daraus ragenden Endabschnitten der Leiterstäbe der Kurzschlussring lagenförmig, insbesondere schraubenbahnförmig mittels eines um die Achse gewickelten Blechbandes geschaffen. Auch dort erfolgt ein elektrisches Kontaktieren der Schraubenbahnen des Blechbandes untereinander und/oder mit den Leiterstäben während dieses Wickelvorganges oder danach.

Ein derartig hergestellter Käfigläufer einer Asynchronmaschine vermeidet nunmehr größere Stanzabfälle und ist einfach herzustellen. Durch die geometrischen Abmessungen des Blechbandes z.B. der gewählten Blechhöhe/Blechdicke und oder der Anzahl beispielsweise der Schraubenbahnen kann nunmehr der aktive stromleitfähige Teil des Kurzschlussringes eingestellt werden.

Als Material des Blechbandes eignen sich alle elektrische leitfähigen Materialen, insbesondere werden Bleche aus Kupferlegierungen oder reinem Kupfer oder Aluminiumlegierung oder Aluminium eingesetzt. Aufgrund der vergleichsweise guten elektrischen Leitfähigkeit wird dabei Kupfer-Chrom-Zirkon (CuCr1Zr)bevorzugt.

Aus diesem Blechband, das auch als sogenanntes Endlosband vorliegen kann, können nahezu sämtliche Nutenformen, sowohl geschlossene Nuten als auch halbgeöffnete oder geöffnete Nuten gebildet werden.

Die Erfindung sowie weitere vorteilhafte Ausgestaltungen der Erfindung werden anhand zweier Ausführungsbeispiele näher erläutert. Darin zeigen:
- FIG 1: einen Längsschnitt einer Asynchronmaschine,
- FIG 2: eine prinzipielle Darstellung des Wickelvorgang eines Blechbandes bei geschlossenen Nuten,
- FIG 3: eine prinzipielle Darstellung eines Wickelvorganges mit radial offenen Nuten,
- FIG 4: Detailansicht eines Abschnitts eines Kurzschlussrings,
- FIG 5: schematische Darstellung einer prinzipiellen Fertigung.

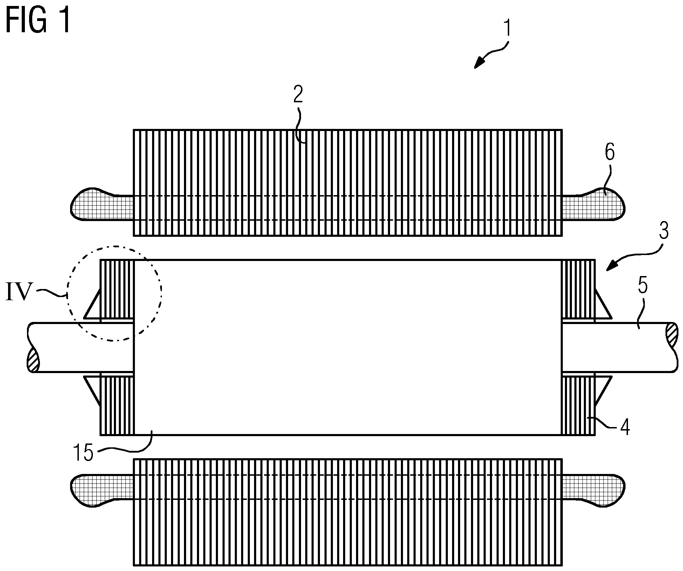

FIG 1 zeigt eine Asynchronmaschine 1 mit einem Stator 2 und einem Käfigläufer bzw. Kurzschlussläufer 3, der an seinen axialen Enden seines magnetischen Grundkörpers 15, insbesondere seines Blechpakets Kurzschlussringe 4 aufweist. Der Kurzschlussläufer 3 ist mit einer Welle 5 drehfest verbunden. Ein Wicklungssystem 6, das in nicht näher dargestellten Nuten des Stators 2 angeordnet ist, generiert durch elektromagnetische Wechselwirkung mit dem Kurzschlussläufer 3 ein Drehmoment, das an der Welle 5 abgegriffen werden kann.

Der Kurzschlussläufer 3 ist durch axial geschichtete Läuferbleche aufgebaut, die im Wesentlichen axial verlaufende Läufernuten aufweisen. In den Läufernuten sind Leiter 13 angeordnet, die über die Stirnseiten des Läuferblechpakets des Kurzschlussläufers 3 ragen und durch einen Kurzschlussring 4 elektrisch leitend miteinander verbunden sind. Der Kurzschlussring 4 weist dazu in Anzahl und Form im Wesentlichen korrespondierende Ausnehmungen 8,12 auf, in die die Endabschnitte 14 der Leiterstäbe bzw. Leiter 13 ragen.

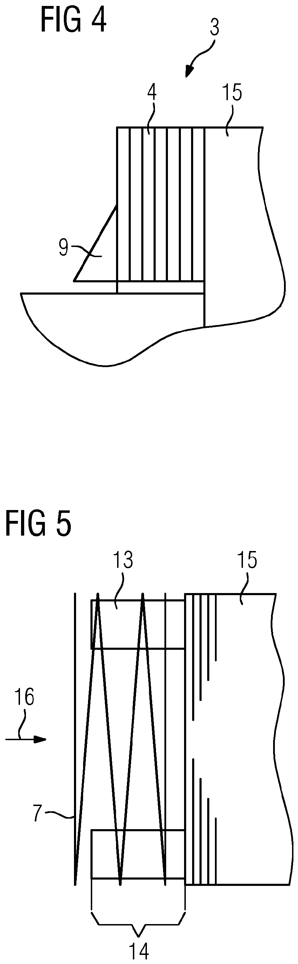

Der Kurzschlussring 4 gemäß FIG 1 und FIG 4 ragt radial bis an den Luftspalt der Asynchronmaschine 1. Aus darstellerischen Gründen ist dabei das Läuferblechpaket nicht lamelliert dargestellt, da sonst keine zeichnerische Unterscheidung zwischen Kurzschlussring 4 und dem Läuferblechpaket möglich gewesen wäre.

Grundsätzlich kann der Kurzschlussring 4 auch radial etwas radial nach innen versetzt sein, insbesondere dann, wenn eine Stahlkappe oder eine Bandage am äußeren Umfang des Kurzschlussringes 4 zur Fliehkraftaufnahme vorgesehen ist, ohne den Durchmesser des Käfigläufers 3 zu vergrößern.

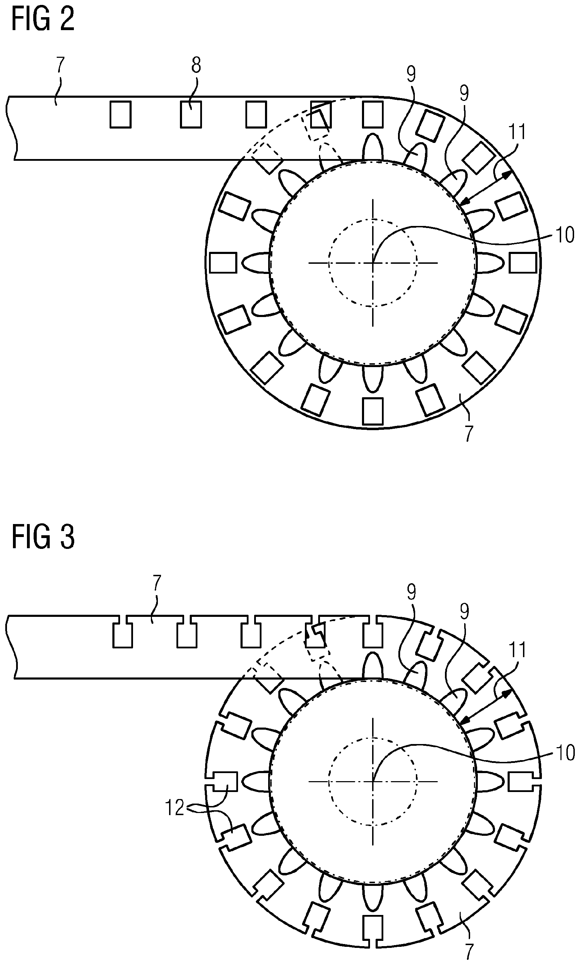

FIG 2 zeigt einen prinzipiellen Wickelvorgang eines Blechbandes 7, insbesondere Kupferbandes um eine Wickelachse 10, das an einem radial äußeren Bereich dieses Kupferbandes 7 Nuten 8 vorsieht, die geschlossen ausgeführt sind. Durch die Anzahl der gewickelten Bahne, also der Schraubenbahnen um die Wickelachse 10 kann die axiale Dicke eines Kurzschlussringes 4 vorgegeben werden. Die Höhe des Kurzschlussringes 4 wird im Wesentlichen durch die Bandhöhe 11 vorbestimmt. Ebenso kann durch die Blechdicke die axiale Dicke des Kurzschlussringes 4 vorgegeben werden.

Um nunmehr den Wickelvorgang dementsprechend zu gestalten, sind Sicken 9 vorzusehen, die eine Stauchung des Kupferbandes 7 in dem radial inneren Bereich des Kupferbandes zu ermöglichen. Die Sicken 9 sind dabei Vertiefungen/Erhebungen in diesem Blech, die bei der schraubenförmigen Gestaltung des Kurzschlussringes 4 ineinander greifen. Durch diese Gestaltung ergeben sich je nach Anordnung des Kurzschlussringes 4, aber bevorzugt auf der dem Blechpaket des Käfigläufers 3 abgewandten Seite des Kurzschlussringes 4 eine Vielzahl von axial abstehenden Sicken 9, die im Betrieb der Asynchronmaschine eine Lüfterwirkung erzielen. Die Anzahl der nasenförmig ausgeführten Sicken 9 hängt u.a. vom Biegeradius des Blechbandes 7 ab.

Um die Stauchung im radial inneren Bereich des Kupferbandes 7 zu vermeiden, sind auch - in Abhängigkeit des Biegeradius - Ausstanzungen möglich, die vorzugsweise beim Wickelvorgang wieder geschlossen werden. Zur Verbesserung der Leitfähigkeit des Kurzschlussringes 4 können diese dann aneinander liegenden Ausstanzungen z.B. durch Schweißvorgänge an ihren benachbarten Stoßstellen wieder geschlossen werden, so dass wieder eine geschlossene Fläche vorliegt.

FIG 3 zeigt einen identischen Wickelvorgang, wobei lediglich dort die Nuten 12 halboffen gestaltet sind, was den Wickelvorgang im Prinzip vor allem im radial äußeren Bereich des Kupferbandes vereinfacht.

Durch die Anzahl der gewickelten Bahnen, also der Schraubenbahnen um die Wickelachse 10 kann die axiale Dicke eines Kurzschlussringes 4 vorgegeben werden. Die Höhe des Kurzschlussringes 4 wird im Wesentlichen durch die Bandhöhe 11 vorbestimmt. Ebenso kann durch die Blechdicke die axiale Dicke des Kurzschlussringes 4 vorgegeben werden. Dabei lassen sich grundsätzlich schmalere Bänder einfacher wickeln. Dies ist insbesondere für Käfigläufer mit vergleichsweise geringer Achshöhe relevant. Dabei ist es vorteilhaft, wenn die radiale Höhe, der aus dem magnetisch leitenden Grundkörper 15 ragenden Leiter - also die Endabschnitte 14 vergleichsweise gering ist, um die radiale Höhe des Kurzschlussrings, also im Wesentlichen der Blechhöhe danach Auswählen zu können.

Um nunmehr den Wickelvorgang dementsprechend zu gestalten, sind Sicken 9 vorzusehen, die eine Stauchung des Kupferbandes 7 in dem radial inneren Bereich des Kupferbandes zu ermöglichen. Die Sicken 9 sind dabei Vertiefungen/Erhebungen in diesem Blech, die bei der schraubenförmigen Gestaltung des Kurzschlussringes 4 ineinander greifen. Durch diese Gestaltung ergeben sich je nach Anordnung des Kurzschlussringes 4, aber bevorzugt auf der dem Blechpaket des Käfigläufers 3 abgewandten Seite des Kurzschlussringes 4 gemäß FIG 4 eine Vielzahl von axial abstehenden Sicken 9, die im Betrieb der Asynchronmaschine eine Lüfterwirkung erzielen. Die Anzahl der nasenförmig ausgeführten Sicken 9 hängt u.a. vom Biegeradius des Blechbandes 7 ab.

Um die Stauchung im radial inneren Bereich des Kupferbandes 7 zu vermeiden, sind auch - in Abhängigkeit des Biegeradius - Ausstanzungen möglich, die vorzugsweise beim Wickelvorgang wieder geschlossen werden. Zur Verbesserung der Leitfähigkeit des Kurzschlussringes 4 können diese dann aneinander liegenden Ausstanzungen durch Schweißvorgänge an ihren benachbarten Stoßstellen wieder geschlossen werden.

Den beiden aufgewickelten Kurzschlussringen 4 ist gemein, dass in die radial äußeren Nuten 8, 12 die Endabschnitte 14 von Leitern 13 eingesetzt werden und diese mit dem Kurzschlussring 4 elektrisch leitend kontaktiert werden.

Der Kurzschlussring 4 kann somit vorab gefertigt werden und anschließend axial auf die Endabschnitte 14 der Leiter 13 bzw. der Leiterstäbe positioniert und elektrisch kontaktiert werden.

Der Kurzschlussring 4 kann aber ebenso schraubenförmig - Lage für Lage - auf die Endabschnitte 14 der im Läuferblechpaket angeordneten Leiter 13 bzw. der Leiterstäbe gewickelt werden, wie dies der FIG 5 zu entnehmen ist. Das Kupferband 7 wird dabei mit den notwendigen Ausnehmungen 8,12 und den Sicken 9 bzw. Ausstanzungen zunächst auf den erforderlichen Radius gebogen und anschließend axial Lage für Lage auf den Endabschnitten 14 der Leiter 13 positioniert. Dieses axiale Aufsetzen 16 kann gleichzeitig auf beiden Stirnseiten oder aber auch nacheinander erfolgen. Dabei findet eine elektrische Kontaktierung der Leiter 13 mit der jeweiligen Lage des Kupferbandes 7 und/oder der vorigen Lage der Kupferbandes 7 statt.

Bei den vorgestellten Wickelverfahren der Blechbänder 7 wird, vor allem wenn die Kontaktierung Leiter und Kurzschlussring 4 durch eine Lötverbindung hergestellt werden soll, zumindest die letzte Lage der Blechbänder 7 ohne Ausnehmung 8,12 aber mit Sicken bzw. Ausstanzungen gewickelt. Damit bilden sich - axial betrachtet - innerhalb des Kurzschlussringes 4 Sacklöcher aus, die als Lötwannen eines Lötprozesses dienen, die für die elektrische Kontaktierung der Leiter 13 mit dem Kurzschlussring 4 erforderlich sind.

Diese Lösung ist besonders für vorab hergestellte Kurzschlussringe 4 geeignet, kann aber auch bei einem Herstellverfahren nach FIG 4 angewandt werden.

Durch den erfindungsgemäßen Aufbau des Kurzschlussringes 4 und des Käfigläufers 3 ist es auch möglich die Kurzschlussringe 4 nicht nur direkt und der Stirnseite des Läuferblechpakets zu positionieren, sondern ebenfalls von dieser Stirnseite beabstandet auszuführen. Selbstverständlich müssen dabei dann ggf. die Endabschnitte 14 der Leiter 13 auch axial weiter aus dem Läuferblechpaket ragen, um eine ausreichende elektrische Kontaktierung zu gewährleisten. Sinnvoll ist dabei zumindest für die erste Lage des Blechbandes 7 eine Art Anschlag direkt auf dem Endabschnitt 14 zumindest eines Leiters 13 oder einer Vorrichtung vorzusehen.

Beim Paketierung des Blechbandes 7 zu einem Kurzschlussring 4 vorab oder direkt auf die Endabschnitte 14 ist es vorteilhaft, wenn die Blechränder am Außenumfang und/oder Innenumfang eine geringe Anfasung aufweisen, um die Kontaktierung der einzelnen Lagen axial übereinander durch Verschweißungs-oder Lötvorgänge zu vereinfachen.

Mit anderen Worten - die Anfasung wird durch eine oder mehrere umfänglich verlaufende V- oder U-förmig Ausnehmung realisiert, die den Schraubenbahnen folgt. Beispielsweise fließt damit bei einem paketierten Kurzschlussring 4 das Lot über diese Ausnehmungen und/oder Spalte zwischen den Schraubenbahnen an die Endabschnitte 14 und umgibt dort die Leiter 12.

Ebenso sind die Kurzschlussringe 4 - sofern notwendig - mit radial außen angeordneten Mitteln zu Aufnahme der Fliehkräfte versehen. Dies sind beispielsweise Stahlbänder oder glasfaserverstärkte Bänder.

Asynchronmaschinen mit derartigen Käfigläufern bzw. Kurzschlussringen werden in unterschiedlichster Anwendung als Antriebsmotoren oder Generatoren eingesetzt. Dies sind vor allem Fahrzeugantriebe, also Wasserfahrzeuge, wie Schiffe, Fähren, Boote und U-Boote, aber auch Antriebe von Schienenfahrzeugen wie Straßenbahnen, Metros, Lokomotiven und Triebfahrzeugen.

Weitere Anwendungsgebiete von Asynchronmaschinen mit derartigen Käfigläufern bzw. Kurzschlussringen sind in der Nahrungs- und Genussmittelindustrie, beispielsweise als Pumpenantriebe, ebenso als hochdrehende Antriebe in der Textilindustrie.

Weitere Einsatzgebiete dieser Asynchronmaschinen mit derartigen Käfigläufern bzw. Kurzschlussringen sind in der Rohstoffindustrie beispielsweise als Antriebe von Rollgängen in Walzwerken.

## Patentansprüche

1. Verfahren zur Herstellung eines Kurzschlussringes (4) eines Käfigläufers (3) einer Asynchronmaschine (1) durch folgende Schritte:
- Stanzen von Ausnehmungen (8,12) aus einem elektrisch leitenden Blechband (7), insbesondere Nuten und/oder Sicken an beiden längeren äußeren Rändern eines Blechbandes (7),
- Verformen des bearbeiteten Blechbandes (7), derart, dass es hochkant schraubenbahnförmig um eine Achse (10) gewickelt wird, und so einen Ringkörper schafft.

2. Verfahren zur Herstellung eines Kurzschlussringes (4) eines Käfigläufers (3) einer Asynchronmaschine (1) nach Anspruch 1, **dadurch gekennzeichnet, dass** die einzelnen Schraubenbahnen miteinander elektrisch leitend verbunden werden.

3. Verfahren zur Herstellung eines Kurzschlussringes (4) eines Käfigläufers (3) einer Asynchronmaschine (1) nach Anspruch 1 oder 2, **dadurch gekennzeichnet, dass** die Ausnehmungen (8,12) im Wesentlichen axial fluchten.

4. Verfahren zur Herstellung eines Kurzschlussringes (4) eines Käfigläufers (3) einer Asynchronmaschine (1) nach einem der Ansprüche 1 bis 3, **dadurch gekennzeichnet, dass** Anfang und Ende des Kurzschlussringes (4) derart gewählt sind, dass Unwuchten des Kurzschlussringes (4) vermieden werden, indem vorzugsweise ein ganzzahliges Vielfaches einer Schraubenbahn des Blechbandes (7) vorgesehen ist.

5. Verfahren zur Herstellung eines Käfigläufers (3) einer Asynchronmaschine (1) durch folgende Schritte:
- Bereitstellen eines magnetisch leitfähigen Grundkörpers mit Nuten,
- Einsetzen zumindest eines elektrisch leitfähigen Leiterstabes in jeweils eine Nut, derart, dass jeweils die Endabschnitte der Leiterstäbe axial beidseitig aus dem Grundkörper ragen,
- axiales Aufsetzen der Kurzschlussringe (4) hergestellt nach einem der Ansprüche 1 oder 4 auf die Endabschnitte der Leiterstäbe.

6. Verfahren zur Herstellung eines Käfigläufers (3) einer Asynchronmaschine (1) nach Anspruch 5, **dadurch gekennzeichnet, dass** die Leiterstäbe mit den Kurzschlussringen (4) elektrisch kontaktiert werden.

7. Verfahren zur Herstellung eines Käfigläufers (3) einer Asynchronmaschine (1) nach Anspruch 6, **dadurch gekennzeichnet, dass** die Leiterstäbe mit den Kurzschlussringen (4) verschweißt werden.

8. Verfahren zur Herstellung eines Käfigläufers (3) einer Asynchronmaschine (1) durch folgende Schritte:
- Bereitstellen eines magnetisch leitfähigen Grundkörpers mit Nuten,
- Einsetzen zumindest eines Leiterstabes in jeweils eine Nut, derart, dass jeweils die Endabschnitte der Leiterstäbe axial beidseitig aus dem Grundkörper ragen,
- Anordnen, insbesondere bewickeln eines biegbaren, elektrisch leitfähigen, mit Ausnehmungen versehenen Blechbandes auf die Endabschnitte der Leiterstäbe, derart, dass die Blechhöhe (11), hochkant betrachtet, im Wesentlichen der radialen Dicke des Kurzschlussringes (4) entspricht.

9. Verfahren zur Herstellung eines Käfigläufers (3) einer Asynchronmaschine (1) nach Anspruch 8, **dadurch gekennzeichnet, dass** ein elektrisches Kontaktieren der Schraubenbahnen des Blechbandes (7) untereinander und/oder mit den Leiterstäben erfolgt.

10. Verfahren zur Herstellung eines Käfigläufers (3) einer Asynchronmaschine (1) nach Anspruch 8 oder 9, dass Anfang und Ende des Kurzschlussringes (4) derart gewählt sind, dass Unwuchten des Kurzschlussringes vermieden werden, indem vorzugsweise ein ganzzahliges Vielfaches einer Schraubenbahn des Blechbandes (7) vorgesehen ist.

11. Käfigläufer (3) einer Asynchronmaschine (1) mit in Nuten eines magnetisch leitfähigen Grundkörpers befindlichen elektrischen Leitern, deren Endabschnitte an den Stirnseiten aus dem Grundkörper ragen und durch Kurzschlussringe (4) elektrisch leitend verbunden sind, wobei die Kurzschlussringe auf zumindest einer Stirnseite des Käfigläufers (3) durch ein hochkant gewickeltes elektrisch leitfähiges Blechband (7) gebildet sind.

12. Käfigläufer (3) nach Anspruch 11, **dadurch gekennzeichnet, dass** die Blechhöhe (11) der radialen Dicke des Kurzschlussringes (4) entspricht.

13. Käfigläufer (3) nach Anspruch 11 oder 12, **dadurch gekennzeichnet, dass** das Blech (7) im radial äußeren Bereich geschlossene oder offene Ausnehmungen (8,12) aufweist.

14. Käfigläufer (3) nach einem der vorhergehenden Ansprüche 11 bis 13, **dadurch gekennzeichnet, dass** das Blechband (7) aus einem elektrisch leitfähigen Material besteht, insbesondere Kupfer oder einer Kupferlegierung.

15. Asynchronmaschine (1) mit einem Käfigläufer (3) nach einem der Ansprüche 11 bis 14.
